# EUROPÄISCHE PATENTANMELDUNG

(11) **EP 1 696 664 A1**
(43) Veröffentlichungstag der Anmeldung: **30.08.2006**
(21) Anmeldenummer: 05003812.4
(22) Anmeldetag: 23.02.2005
(51) Int. Cl.: H04N 5/64

(54) **LCD-TV mit im Standfuss integriertem DVD-Spieler**

(71) Anmelder: Rochel, Jan, 75245 Neulingen (DE)
(72) Erfinder: Rochel, Jan, 75245 Neulingen (DE)

(57) **Zusammenfassung**

Fernsehgerät mit Flüssigkristallbildschirm (10) (Liquid Crystal Display, LCD) und im Standfuß integriertem DVD (Digital Versatile Disc)-Spieler (40). Diese Anordnung gewährleistet Verbesserungen bezüglich der Stabilität und Bedienbarkeit des DVD-Laufwerks (40), der Störanfälligkeit des Bildschirms (10) und der Größe und des Gewichts des Gerätes.

## Beschreibung

Die Erfindung bezieht sich auf das Gebiet der Fernsehgeräte mit Flüssigkristallbildschirm (Liquid Crystal Display, LCD) und integriertem DVD (Digital Versatile Disc)-Spieler.
Es existieren schon verschiedene Geräte dieser Art, deren DVD-Laufwerk vertikal hinter dem Bildschirm angebracht sind.
Bei der vorliegende Erfindung hingegen ist das DVD-Laufwerk horizontal im Standfuß des Gerätes integriert. Der Standfuß übernimmt also zusätzlich die Funktion als Gehäuse für das DVD-Laufwerk, was folgende Vorteile schafft:
- Bessere Bedienbarkeit des DVD-Laufwerks, da es
   1. besser für den Benutzer zugänglich ist und
   2. die Datenträger horizontal eingelegt werden können.
- Vermeidung von elektromagnetischen Störungen des Bildschirms durch den DVD-Spieler.
- Durch diese Anordnung wird eine gewisse Formschönheit erzielt.
- Standfuß als Gehäuse gewährleistet eine größere Stabilität für das DVD-Laufwerk als die Rücksite des Bildschirms.
- Es entfällt der Bedarf für ein zusätzliches Gehäuse für den DVD-Spieler, wodurch sich sowohl Gewicht als auch Größe des Gerätes sich reduzieren.

Im folgenden wird die Erfindung anhand der beigefügten Zeichnungen veranschaulicht:

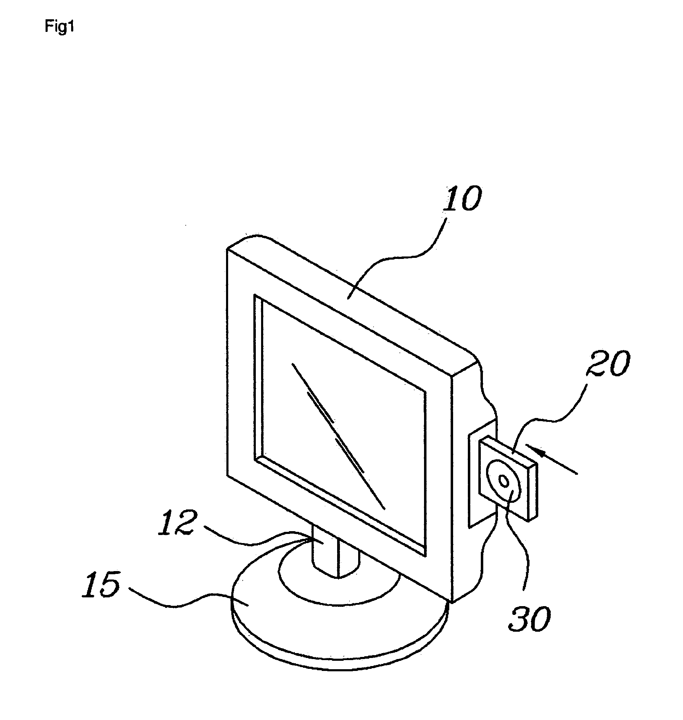

- Fig1: LCD-TV mit integrietem DVD-Spieler nach herkömmlicher Anordnung.

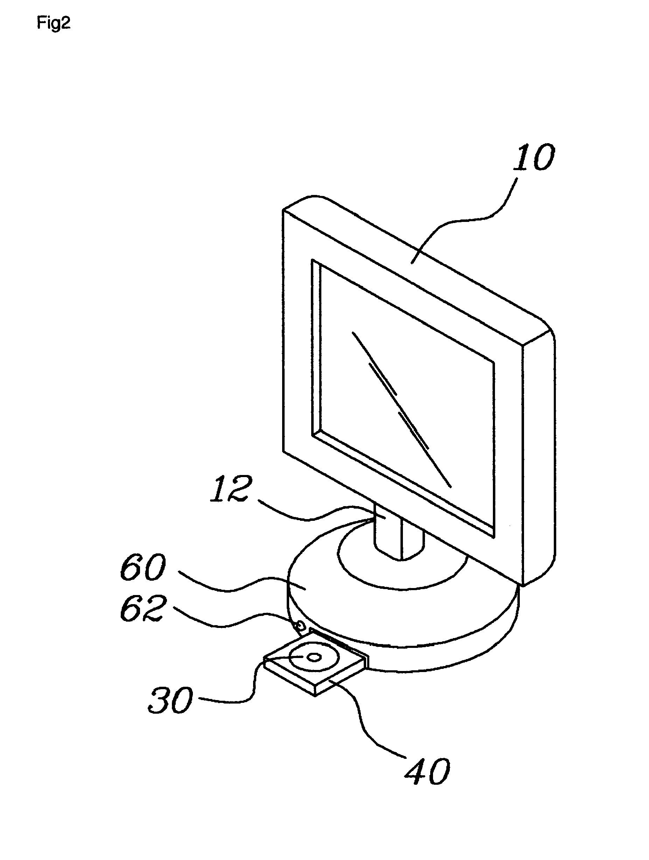

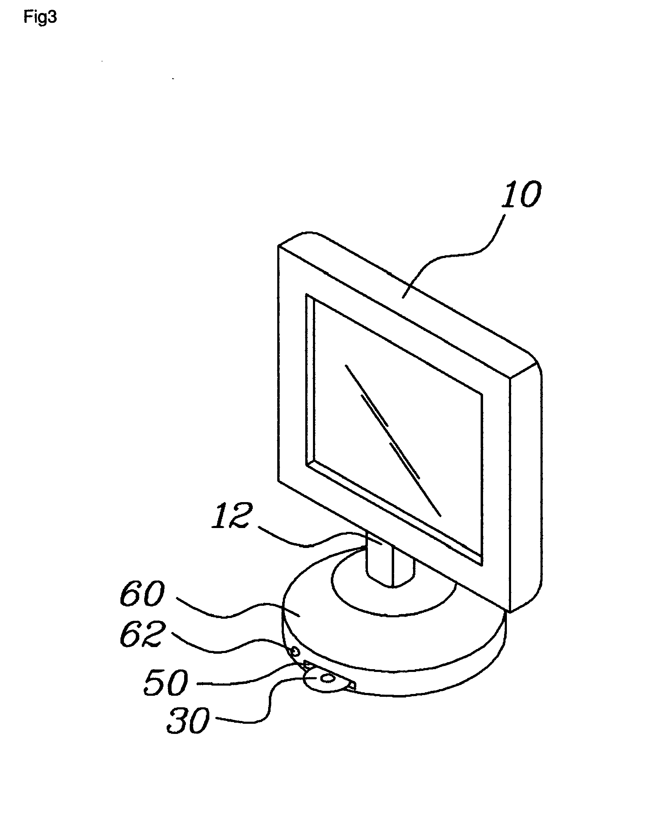

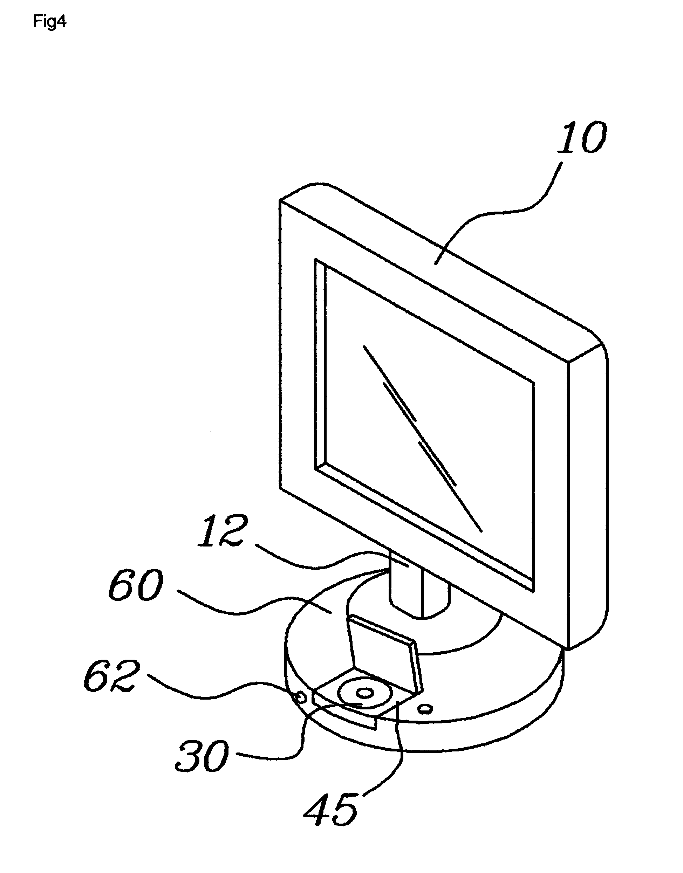

- Fig1, Fig2, Fig3: Ausführungsbeispiele eines erfindungsgemäßen Gerätes.

Wie aus Fig1 ersichtlich ist, ist das DVD-Laufwerk (20) hinter dem Bildschirm (10) des Gerätes angebracht. Dadurch muss der Datenträger (30) vertikal eingelegt werden. Gemäß Fig1, Fig2, Fig3 ist das Laufwerk (40,45,50) im Standfuß (60) des Gerätes intergriert. Der Datenträger (30) kann horizontal eingelegt werden.

## Patentansprüche

1. Fernsehgerät mit Flüssigkristallbildschirm (10) (Liquid Crystal Display, LCD) und integriertem DVD (Digital Versatile Disc)-Spieler (40,45,50) **gekennzeichnet durch** horizontale Integration des DVD-Laufwerks im Standfuß (60) des Gerätes.
